# EUROPÄISCHE PATENTSCHRIFT

(11) **EP 3 411 321 B1**
(45) Veröffentlichungstag und Bekanntmachung des Hinweises auf die Patenterteilung: **06.09.2023**
(21) Anmeldenummer: 17704392.4
(22) Anmeldetag: 10.02.2017
(51) Int. Cl.: B64U 101/30, B66C 15/04, B66C 13/08, B66C 1/00, B64C 39/02, B66C 13/46

(54) **VERFAHREN ZUR ÜBERWACHUNG WENIGSTENS EINES KRANS**
PROCEDURE TO MONITOR AT LEAST A CRANE
PROCÉDÉ POUR SURVEILLER AU MOINS UNE GRUE

(30) Priorität: 12.02.2016 DE 102016001684
(43) Veröffentlichungstag der Anmeldung: 12.12.2018
(73) Patentinhaber: Liebherr-Werk Biberach GmbH, 88400 Biberach an der Riss (DE)
(72) Erfinder: MAYER, Joachim, 88400 Biberach (DE)
(74) Vertreter: Laufhütte, Dieter
(86) Internationale Anmeldenummer: PCT/EP2017/000188
(87) Internationale Veröffentlichungsnummer: WO 2017/137166

(56) Entgegenhaltungen:
- EP-A1- 0 596 330
- CN-A- 102 275 827
- DE-A1- 10 202 399
- DE-U1-202012 012 116
- GB-A- 2 205 463
- JP-A- 2003 327 388
- JP-A- 2006 282 337
- JP-A- 2007 323 112
- US-A1- 2010 039 319
- US-A1- 2010 103 260
- US-A1- 2015 329 333
- US-A1- 2016 031 680

## Beschreibung

Die Erfindung betrifft ein Verfahren zur Überwachung eines oder mehrerer Turmdrehkrane auf einer Baustelle.

Die Bedienung des Krans und die Steuerung des Lasthakens, mit/oder ohne angehängte Last, erfolgt üblicherweise durch Kranführer, die sich entweder in der Krankabine, auf einem Steuerpodest oder aber am Boden im Arbeitsbereich des Kranes befinden. Von der Krankabine aus ist der beste Überblick über die Baustelle gewährleistet, jedoch ist der Abstand zwischen dem Kranführer und dem Lasthaken meist so groß, dass ein exaktes Verfahren einer zu positionierenden Last oder des Lasthakens schwierig ist. Zudem kommt es häufig vor, dass sich der Lasthaken in einem Bereich befindet, der vom Kranführer nicht oder nur beschränkt eingesehen werden kann. Beispielsweise wenn der Lasthaken hinter einer Gebäudekante abtaucht, und die direkte Sichtlinie auf die Last von der Krankabine aus blockiert wird. In diesen Fällen wird meist über eine zweite Person eine Einweisung vorgenommen.

Eine weitere Möglichkeit ist die Steuerung des Krans über eine Funkfernsteuerung, die dem Bediener das Verlassen der Kranführerkabine erlaubt, um sich in eine günstigere Position mit besserer Sicht auf die Last oder den Lasthaken zu begeben. Das bedingt aber teilweise schwierige oder eventuell gefährliche Bewegungen der Personen über die Baustelle.

Der Gegenstand der Erfindung ist die Vermeidung von möglichen Kollisionen des Krans mit anderen Objekten bzw. anderen Kranen auf der Baustelle. Um drohende Kollisionen zwischen zwei oder mehreren Kranen auf ein oder derselben Baustelle zu vermeiden, werden bisher entsprechende Antikollisionssysteme eingesetzt. Die bisherigen Antikollisionssysteme (AKS) werden oftmals von Fremdanbietern entwickelt und geliefert und nur bei Bedarf in Turmdrehkrane auf Baustellen eingebaut.

Für die Integration des AKS ist im Kran eine externe Schnittstelle vorgesehen, an der die Fremdanbieter ihre Module für die Antikollisionssysteme ankoppeln und die notwendigen Krandaten abgreifen können. Zu diesen Daten gehören vor allem der aktuellen Drehwinkel, die Katzposition oder die Senktiefe der aufgenommenen Last. Die über die Schnittstelle abgegriffenen Daten werden in einem Berechnungsmodell verarbeitet, um die mögliche Kollisionsgefahr zu bestimmen und frühzeitig auszugeben. Wird eine drohende Kollisionsgefahr erkannt, kommt es zur Abschaltung aller Krane auf der Baustelle. Gerade bei einer Vielzahl an Kranen auf der Baustelle ist die Wahrscheinlichkeit für ein derartiges Abschaltungsszenario nicht klein und die Abschaltung aller Krane, d.h. nicht nur der unmittelbar kollisionsgefährdeten Krane, führt zu einem enormen Eingriff in den Arbeitsbetrieb auf der Baustelle. Dies wiederum führt zu einer deutlich schlechteren Akzeptanz derartiger Systeme bei den Kranfahrern.

Ferner ist bei diesen Systemen eine Erkennung der Lastposition bzw. der Lastbewegung nur im starren Zustand möglich, da Verformungen des Tragwerks oder etwaige Schwingungen des Hubseils, die während der üblichen Kranbewegung auftreten, anhand der über die Schnittstelle ausgetauschten Daten nicht erkannt werden können. Zudem werden nur Kollisionsgefahren zwischen Kranen erkannt, die mit einer entsprechenden AKS ausgerüstet sind. Drohende Kollisionen mit anderen Objekten auf der Baustelle, wie z.B. Fahrzeugen, Bauwerken, Bauteilen oder gar umherlaufenden Personen, können weder erfasst noch erkannt werden.

Aus Dokument US2015/329333A1 bekannt ist, ein Turmdrehkran mit eine Lasthaken-Positionsbestimmungseinrichtung die eine an der Laufkatze angebrachte Kamera umfasst, die zusammen mit der Laufkatze verfahrbar ist und von der Laufkatze im Wesentlichen senkrecht nach unten blickt.

Der Turmdrehkran umfasst weiter eine Kollisionsüberwachungseinheit die aufgenommenen Bilddaten analysiert, und Kranbewegungen in Abhängigkeit von dem Lasthaken umfassen Position relativ zur Lasthakennachbarschaf steuern.

Es wird folglich nach einem geeigneten Verfahren gesucht, das eine verbesserte Überwachung eines Krans bzw. eine verbesserte Überwachung mehrerer Krane für die Ausführung einer Antikollisionsüberwachung ermöglicht.

Gelöst wird diese Aufgabe mittels eines ersten Aspektes der Erfindung gemäß dem Verfahren nach Anspruch 1. Vorteilhafte Ausgestaltungen des Verfahrens sind Gegenstand der sich an den Hauptanspruch anschließenden Unteransprüche.

Erfindungsgemäß wird ein Verfahren zur Überwachung eines oder mehrerer Turmdrehkrane auf einer Baustelle vorgeschlagen. Hierzu werden ein oder mehrere optische Erfassungsmittel verwendet, um relevante Bauteile ein oder mehrerer Krane zu beobachten. Die Erfassungsmittel generieren optische Daten, die an eine Kollisionsüberwachungseinheit weitergereicht werden. Diese empfängt die optischen Daten der ein oder mehreren Erfassungsmittel und analysiert diese mittels eines geeigneten Erkennungsalgorithmus. Durch die Analyse werden mögliche Kollisionen zwischen wenigstens einem Kran und einem Objekt, bspw. einem weiteren Kran oder einer sonstigen Störkante, wie Baustellenfahrzeuge, Gebäude, Bäume oder Personen, erkannt.

Mit den ein oder mehreren Erfassungsmitteln soll der Kran als auch die nähere Kranumgebung beobachtet werden. Dadurch lassen sich nicht nur Kollisionen mit anderen Kranen sondern auch mit anderen Objekten zuverlässig vorhersagen. Durch rechtzeitigen Eingriff der Kollisionsüberwachungseinheit in die jeweilige Kransteuerung können die Kollisionen verhindert werden, wobei in diesem Fall gezielt die unmittelbar betroffenen Krane abgeschaltet werden können. Andere Krane, die zwar ebenfalls durch die Erfassungsmittel beobachten werden, jedoch nicht unmittelbar von der Kollisionsgefahr betroffen sind, können gefahrlos weiterarbeiten.

Die Kollisionsüberwachungseinheit kommuniziert ggf. über eine geeignete Kranschnittstelle mit der Kransteuerung wenigstens eines Krans auf der Baustelle. Im Fall einer Erkennung einer drohenden Kollision werden etwaige Steuerungssignale von der Kollisionsüberwachungseinheit an die Kransteuerung des betroffenen Krans versendet, um ein verzögerungsfreies Abschalten der Kranbewegungen zu erwirken. Denkbar ist es ebenfalls, dass über die Schnittstelle von der Kransteuerung Kranbewegungsdaten an die Kollisionsüberwachungseinheit übertragen werden, um diese ergänzend für die Kollisionserkennung zu berücksichtigen, bspw. zur Verifizierung der analysierten Bilddaten. Dies kann die frühzeitige Vorhersage von Gefahrensituationen verbessern.

Zu diesen Daten, die von wenigstens einer Kransteuerung an die Kollisionsüberwachungseinheit übermittelt werden, zählen beispielsweise aktuelle Kranparameter des Kranbetriebs, die vorzugsweise den aktuellen Drehwinkel des Auslegers beim Obendreherkran, die aktuelle Katzposition einer Laufkatze oder die Senktiefe der aufgenommenen Last darstellen.

Gemäß einer bevorzugten Ausführungsform können die ein oder mehreren optischen Erfassungsmittel an der Kranstruktur eines Krans fest oder lösbar angeordnet sein. Insbesondere ist es denkbar, separate optische Erfassungsmittel unterschiedlichen Kranbauteilen zuzuordnen bzw. an diesen zu montieren, beispielsweise kann am Ausleger und/oder am Gegenausleger und/oder der Laufkatze und/oder dem Lasthaken und/oder einer Drehbühne bei Untendreherkranen jeweils ein optisches Erfassungsmittel vorgesehen sein. Ebenso besteht die Möglichkeit, ein oder mehrere Erfassungsmittel im Umfeld eines Krans zu montieren.

Alternativ oder ergänzend kann vorgesehen sein, dass ein oder mehrere optische Erfassungsmittel in Form von mobilen Erfassungsmitteln ausgestaltet sind, die weder an der Kranstruktur fest angeordnet sind, noch an einem sonstigen Drittobjekt der Baustelle. Stattdessen werden derartige mobile Erfassungsmittel zur Kranlaufzeit bewegt, um relevante Kranbauteile anwendungs- und situationsabhängig zu überwachen und diesbezügliche Bildinformationen an die Kollisionüberwachungseinheit zu übertragen. Erfindungsgemäß erweisen sich fliegende Erfassungsmittel, die auch schwer zugängliche Kranstellen bzw. Komponenten aus nächster Nähe erfassen und somit ausreichend präzise Daten für die nachfolgende Datenanalyse generieren können.

Die optischen Erfassungsmittel weisen ein oder mehrere geeignete Bildsensoren bzw. Kameras zur Aufnahme der Kranbauteile bzw. Kranumgehung auf. Idealerweise werden 3-dimensionale Kameras eingesetzt.

Gemäß der Erfindung ist eine automatisierte Ansteuerung des Bewegungsapparates der mobilen Erfassungsmittel wünschenswert, um den Kranführer von der zusätzlichen Steuerung des Erfassungsmittels zu befreien. Mit der automatisierten Ansteuerung der mobilen Erfassungsmittel kann stets sichergestellt werden, dass diese eine optimale Beobachtungsposition auf das situationsabhängig relevante Kranbauteile hat. In diesem Zusammenhang ist eine zur regulären Kransteuerung synchronisierte Ansteuerung der mobilen Erfassungsmittel vorstellbar. Beispielsweise kann die Ansteuerung der mobilen Erfassungsmittel mit der Bewegung eines Lasthakens synchronisiert sein. Das Erfassungsmittel bewegt sich dadurch synchron mit dem Lasthaken mit, wodurch stets eine optimale Beobachtungsposition gewährleistet ist. Dies ist jedoch nur ein Ausführungsbeispiel, es bietet sich eine synchrone Ansteuerung mit jedem bewegbaren Kranbauteil des Krans an, so beispielsweise auch mit dem Ausleger, der Laufkatze oder sonstigen Komponenten.

Durch die erfindungsgemäße Kollisionsüberwachungseinheit und durch die nachfolgende Analyse der optischen Daten ist es möglich, dynamische Verformungen der Kranstruktur zu erfassen und diese ebenfalls für die Kollisionsüberwachung zu berücksichtigen. Gleiches gilt für etwaige Pendelbewegungen des Hubseils, die durch bisherige Systeme nicht erfassbar waren. Die bildgebende Beobachtung und die nachfolgende Bildanalyse lässt zudem eine erfolgreiche Erkennung etwaiger Pendelbewegungen der Last oder der damit verbundenen Krankomponenten zu. Ebenfalls lässt sich mit Hilfe des Bildmaterials die konkrete Lastkontur für die Kollisionsüberwachung berücksichtigen. Während bestehende Systeme auf die Messdaten am Kran angewiesen waren, die eine genaue Erfassung der aufgenommenen Last jedoch nicht ermöglichten, kann mithilfe des erfindungsgemäßen Verfahrens auch die tatsächliche Lastkontur für die Kollisionsüberwachung berücksichtigt werden.

Der Gegenstand der vorliegenden Erfindung betrifft ein Verfahren zur Überwachung und/oder Inspektion eines oder mehrerer Turmdrehkrane. Für die Überwachung und/oder Inspektion des Kranes wird erfindungsgemäß ein mobiles optisches Erfassungsmittel eingesetzt, ein fliegendes optisches Erfassungsmittel. Dieses fährt/fliegt die zu überwachenden Krankomponenten ab und gestattet somit stets eine optimale Beobachtungsposition relativ zu den beobachteten Komponenten. Die generierten optische Beobachtungsdaten lassen sich an eine Auswerteeinheit, einen Kranführerstand oder direkt an die Kransteuerung versenden.

Der Kranführer kann bequem an seinem konventionellen Arbeitsplatz verbleiben und muss sich in spezifischen Betriebssituationen nicht auf Informationen von Drittperson verlassen. Auch ein zwischenzeitliches Verlassen des Kranführerstands wird überflüssig. Stattdessen werden ihm die erfassten Beobachtungsdaten des mobilen Erfassungsmittels auf einen Monitor des Kranführerstandes eingeblendet, sodass er von dort aus eine optimale Beobachtungsposition für die Kransteuerung hat. Ein derartiges mobiles Erfassungsmittel sammelt insbesondere Bildinformationen, die mithilfe einer Kamera, vorzugsweise einer dreidimensionalen Kamera aufgenommen werden.

Das mobile Erfassungsmittel kann als Multikopter ausgeführt sein, der mit entsprechenden Bildaufnahmesensoren ausgestattet ist und ein entsprechendes Kommunikationsmodul umfasst, um die optischen Daten an die Kransteuerung bzw. den Kranführerstand zu übermitteln.

Auch hier bietet sich eine zur regulären Kransteuerung synchronisierte automatische Ansteuerung des Erfassungsmittels an, um stets die optimale Beobachtungsposition des Erfassungsmittels zu gewährleisten. Der Kranführer muss sich demnach nicht noch mit der Steuerung des Erfassungsmittels auseinandersetzen, sondern kann sich voll und ganz auf die Kransteuerung konzentrieren. Das Erfassungsmittel wird synchron mit einer bewegten Krankomponente mitbewegt. Die Bildinformationen zu den steuerrelevanten Kranbauteilen werden in Echtzeit auf eine Anzeige übertragen.

Denkbar ist es auch, dass die synchronisierte Ansteuerung des Erfassungsmittels mithilfe einer drahtlosen Kommunikationsverbindung zwischen dem mobilen Erfassungsmittel und dem zu beobachtenden Kranbauteil erfolgt. Beispielsweise könnten Lasthaken und Erfassungsmittel in Funkverbindung stehen. Bei Betätigung des Lasthakens wird das Erfassungsmittel automatisiert mitbewegt.

Neben dem erfindungsgemäßen Verfahren betrifft die vorliegende Erfindung ebenfalls ein System zur Kollisionsüberwachung ein oder mehrerer Krane, wobei das System zur Ausführung des erfindungsgemäßen Verfahrens gemäß einem der Ansprüche 1 bis 7 angeordnet ist. Die Vorteile und Eigenschaften des-Systems entsprechen offensichtlich denen des erfindungsgemäßen Verfahrens, weshalb auf eine wiederholende Beschreibung verzichtet wird.

Die Erfindung soll nachfolgend nochmals erläutert werden. Zunächst soll die Kollisionsüberwachung beschrieben werden. Die erfindungsgemäße Idee geht davon aus, dass der aktuelle Zustand auf der Baustelle mittels ein oder mehrerer Kameras erfasst wird, die im Umfeld des Krans oder alternativ an den Bauteilen des Krans und der angehängten Last befestigt sind. Insbesondere sind Kameras am Ausleger, am Gegenausleger, an der Laufkatze, am Lasthaken oder auch an der Drehbühne bei Untendrehern montiert. Diese überwachen die jeweiligen Bauteile und übermitteln ihre Beobachtungsdaten, d.h. die Bilddaten, an eine zentrale Kollisionsüberwachungseinheit. Diese führt mittels Bildanalyseverfahren eine Kollisionsüberwachung aus, wobei anhand der übermittelten bildlichen Informationen drohende Kollisionen frühzeitig erkannt werden können. Zum einen lassen sich dadurch nicht nur Kollisionen zwischen den einzelnen Kranen der Baustelle erfassen, sondern es kann auch eine Kollisionsgefahr eines Krans mit anderen Gebäuden, Bauteilen, Geräten oder auch Personen auf der Baustelle erkannt werden.

Zudem bietet das erfindungsgemäße System und Verfahren den Vorteil, dass auch Gefahren erkannt werden können, die durch die Konturen der angehängten Last entstehen, so z.B. bei langen Bauteilen. Des Weiteren erlaubt die Auswertung der Bilddaten eine Erkennung von Gefahren während des Kranbetriebes, unabhängig von der Art der Kranbewegung, der dynamischen Verformungen der Kranstruktur sowie etwaige Pendelbewegungen des Hubseiles.

Neben den festangeordneten Kameras an den einzelnen Kranbauteilen ist eine mobile Erfassungseinheit, z.B. in Form eines Multikopters zum Einsatz kommen. Ein derartiger Multikopter ist mit Kameras ausgestattet, um gesteuert etwaige Umgebungsabschnitte aus der Luft zu beobachten.

Nachfolgend wird ein weiteres Ausführungsbeispiel der nicht zur Erfindung gehört erläutert, die Ausgestaltungen des Multikopters gelten jedoch auch für den Einsatz des Multikopters für eine Kollisionsüberwachung.

Die Lösung zur Überwachung und Inspektion eines Krans ist die Nutzung z.B. wenigstens eines Multikopters, der durch die Ausrüstung mit einer Kamera und verschiedenen Steuerungsmöglichkeiten folgende Vorteile mit sich bringt. Durch den Multikopter kann stets eine optimale Sicht auf die Last aus geringer Entfernung und in günstiger Beobachtungsposition erfolgen. Dies gewährleistet eine stets gute Verfolgung der Last während der Kranbewegung und des Lasthakens. Die Darstellung der aufgenommenen Bilddaten des Multikopters kann am Monitor beim Kranführer erfolgen.

Weiterhin wird der Multikopter automatisch und zum Lasthaken synchron angesteuert, sodass stets eine optimale Beobachtungsposition sichergestellt ist. Die synchrone Steuerung des Multikopters erfolgt durch eine drahtlose Kommunikation zwischen Lasthaken und Multikopter, mit der Möglichkeit, bei Bedarf manuell einzugreifen und die Position oder Blickrichtung des Multikopters zu ändern.

Weitergehend ist es vorstellbar, dass auch die Steuerung des Lasthakens automatisiert wird, wobei für eine automatisierte Steuerung die gelieferten Bilddaten des Multikopters herangezogen werden. Mit dem Multikopter kann auch eine Erkennung der Hakenposition durch schnurlose Überwachungssysteme und automatische Steuerung der Kranbewegung durch die Definition der Absetzposition, so z.B. über räumliche Koordinaten, erfolgen. Im Endeffekt bietet der Einsatz eines Multikopters einen nahezu vollständig automatisierten Kranbetrieb.

Darüber hinaus ist die Nutzung des Multikopters mit Kamera dazu geeignet, die Inspektion des montierten Krans deutlich zu vereinfachen und an schwer zugänglichen Stellen überhaupt erst zu ermöglichen. Zu erwähnen ist hier die Abspannung von Katzauslegerkranen, die nur mit sehr großem Aufwand inspiziert werden können. Durch das Abfliegen mit einer Kamera, die entsprechende Bildqualität liefert, können sowohl die Bauteile als auch Verbindungsmittel gezielt untersucht werden und so beispielsweise auf Vollständigkeit (Bolzen, Schrauben, Spindel), Risse, Korrosionsschäden, Lochspiel untersucht werden.

## Patentansprüche

1. Verfahren zur Überwachung eines oder mehrerer Turmdrehkrane auf einer Baustelle, wobei
ein oder mehrere fliegende optische Erfassungsmittel mit mindestens einer Kamera zur Aufnahme von optischen Daten vorgesehen sind, deren Bewegungen synchron zur Kransteuerung wenigstens eines Krans automatisch gesteuert werden, und
eine Kollisionsüberwachungseinheit die aufgenommenen optischen Daten analysiert, um eine mögliche Kollision zwischen wenigstens einem Kran und einem weiteren Kran und/oder einer sonstigen Störkante zu erkennen.

2. Verfahren nach Anspruch 1, **dadurch gekennzeichnet, dass** die Kollisionsüberwachungseinheit über eine geeignete Kranschnittstelle mit der Kransteuerung wenigstens eines Krans kommuniziert, wobei bei Erkennung eines Kollisionsfalls Steuersignale an die Kransteuerung des wenigstens eines Krans gesendet werden, insbesondere zum sofortigen Kranstopp.

3. Verfahren nach Anspruch 2, **dadurch gekennzeichnet, dass** die Kollisionsüberwachungseinheit über die Schnittstelle von wenigstens einem Kran Steuerinformationen abruft, insbesondere Informationen über den aktuellen Drehwinkel, die Katzposition, die Senktiefe der aufgenommenen Last des Krans und diese empfangenen Informationen gegebenenfalls neben den optischen Daten bei der Erkennung möglicher Kollisionen berücksichtigt.

4. Verfahren nach einem der vorhergehenden Ansprüche, **dadurch gekennzeichnet, dass** wenigstens eines der einen oder mehreren weiteren optischen Erfassungsmittel an der Kranstruktur eines Kranes angeordnet ist, insbesondere sind separate optische Erfassungsmittel an unterschiedlichen Kranbauteilen eines Krans montiert, beispielsweise am Ausleger und/oder Gegenausleger und/oder der Laufkatze und/oder am Lasthaken und/oder an einer Drehbühne.

5. Verfahren nach einem der vorhergehenden Ansprüche, **dadurch gekennzeichnet, dass** ein oder mehrere optische Erfassungsmittel Bildsensoren sind, insbesondere eine 3-dimensionale Kamera.

6. Verfahren nach einem der vorhergehenden Ansprüche, **dadurch gekennzeichnet, dass** die Kollisionsüberwachungseinheit durch Analyse der optischen Daten dynamische Verformungen des Krantragwerkes und/oder Pendelbewegungen des Hubseiles erfasst und für die nachfolgende Kollisionsüberwachung berücksichtigt.

7. Verfahren nach einem der vorhergehenden Ansprüche, **dadurch gekennzeichnet, dass** die Kollisionsüberwachungseinheit Kollisionen der Lastkontour mit fremden Objekten und/oder Kranen erkennt.

8. System zur Kollisionsüberwachung ein oder mehrerer Turmdrehkrane angeordnet zur Ausführung des Verfahrens gemäß einem der Ansprüche 1 bis 7.

## Claims

1. A method of monitoring one or more cranes revolving tower cranes on a construction site, wherein
one or more flying optical detection means for recording optical data are provided whose movements are automatically controlled in synchrony with the crane control of at least one crane, and wherein
a collision monitoring unit analyzes the recorded optical data to recognize a possible collision between at least one crane and one further crane and/or another projecting edge.

2. A method in accordance with claim 1, **characterized in that** the collision monitoring unit communicates with the crane control of at least one crane via a suitable crane interface, with control signals being transmitted to the crane control of the least one crane, in particular for an immediate crane stop, on a recognition of a collision case.

3. A method in accordance with claim 2, **characterized in that** the collision monitoring unit invokes control information via the interface of at least one crane, in particular information on the current slew angle, the trolley position, the lowered height of the load of the crane taken up and takes this received information, optionally in addition to the optical data, into account in the recognition of possible collisions.

4. A method in accordance with one of the preceding claims, **characterized in that** at least one of the one or more further optical detections means is arranged at the crane structure of a crane; in particular separate optical detection means are installed at different crane components of a crane, for example at the boom and/or counter-boom, and/or at the trolley and/or at the lifting hook and/or at a slewing platform.

5. A method in accordance with one of the preceding claims, **characterized in that** one or more optical detection means are image sensors, in particular a 3-dimensional camera.

6. A method in accordance with one of the preceding claims, **characterized in that** the collision monitoring unit detects dynamic deformations of the crane bearing structure and/or oscillation movements of the hoist rope by analysis of the optical data and takes them into account for the following collision monitoring.

7. A method in accordance with one of the preceding claims, **characterized in that** the collision monitoring unit recognizes collisions of the load contour with third-party objects and/or cranes.

8. A system for collision monitoring of one or more revolving tower cranes arranged for carrying out the method in accordance with one of the claims 1 to 7.

## Revendications

1. Procédé pour surveiller une ou plusieurs grues à tour sur un chantier, dans lequel
un ou plusieurs moyens de détection optiques volants dotés d'au moins une caméra pour enregistrer des données optiques sont prévus, dont les mouvements sont commandés automatiquement de manière synchrone par rapport à la commande de grue d'au moins une grue, et
une unité de surveillance anticollision analyse les données optiques enregistrées
pour reconnaître une collision possible entre au moins une grue et une autre grue et/ou un autre bord d'interférence.

2. Procédé selon la revendication 1, **caractérisé en ce que** l'unité de surveillance anticollision communique avec la commande de grue d'au moins une grue par le biais d'une interface de grue appropriée, dans lequel, lors de la reconnaissance d'un cas de collision, des signaux de commande sont envoyés à la commande de grue de l'au moins une grue, en particulier pour un arrêt de grue immédiat.

3. Procédé selon la revendication 2, **caractérisé en ce que** l'unité de surveillance anticollision appelle, auprès d'au moins une grue, des informations de commande par le biais de l'interface, en particulier des informations concernant l'angle de rotation actuel, la position de chariot, la profondeur de descente de la charge suspendue de la grue et prend en compte ces informations reçues, le cas échéant en plus des données optiques, lors de la reconnaissance de collisions possibles.

4. Procédé selon l'une des revendications précédentes, **caractérisé en ce qu'**au moins un du ou des plusieurs autres moyens de détection optiques est disposé sur la structure de grue d'une grue, des moyens de détection optiques séparés étant en particulier montés sur différents éléments de grue d'une grue, par exemple sur la flèche et/ou la contre-flèche et/ou le chariot roulant et/ou le crochet porte-charge et/ou une plateforme tournante.

5. Procédé selon l'une des revendications précédentes, **caractérisé en ce qu'**un ou plusieurs moyens de détection optiques sont des capteurs d'images, en particulier une caméra à trois dimensions.

6. Procédé selon l'une des revendications précédentes, **caractérisé en ce que** l'unité de surveillance anticollision détecte, par l'analyse des données optiques, des déformations dynamiques de l'ossature porteuse de grue et/ou des mouvements oscillants du câble de levage et les prend en compte pour la surveillance anticollision suivante.

7. Procédé selon l'une des revendications précédentes, **caractérisé en ce que** l'unité de surveillance anticollision reconnaît des collisions du contour de la charge avec des objets et/ou grues étrangers.

8. Système de surveillance anticollision d'une ou de plusieurs grues à tour, disposé pour l'exécution du procédé selon l'une des revendications 1 à 7.
